# EUROPEAN PATENT SPECIFICATION

(11) **EP 3 524 478 B1**
(45) Date of publication and mention of the grant of the patent: **22.01.2020**
(21) Application number: 18155452.8
(22) Date of filing: 07.02.2018
(51) Int. Cl.: B60R 9/06, B60D 1/06, B60R 9/10

(54) **BIKE CARRIER**
FAHRRADTRÄGER
SUPPORT DE VÉLO

(43) Date of publication of application: 14.08.2019
(73) Proprietor: Thule Sweden AB, 335 04 Hillerstorp (SE)
(72) Inventor: ALMHILL, Stefan, 562 40 Taberg (SE); KARLSSON, Peter, 302 75 Halmstad (SE)
(74) Representative: Wallentin, Lars

(56) References cited:
- US-A- 5 950 892
- US-A1- 2005 205 629
- US-A1- 2009 095 782
- US-A1- 2015 375 585

## Description

### FIELD OF THE INVENTION

The present invention relates to a bike carrier mountable on the trailer coupling of a vehicle.

### BACKGROUND

Bike carriers that are mountable on the trailer coupling of a vehicle have become increasingly popular. Such bike carriers are usually coupled to the trailer coupling by clamping a coupling body of the trailer coupling such as a ball head. Coupling mechanisms used in this regard are often complex and the load applied on the trailer coupling is transferred via the ball head to a great extent limiting the load to be transported. US 2005/0205629 A1 discloses a bicycle rack mountable on the trailer coupling of a vehicle.

### SUMMARY

It is the object of the invention to provide an easy to mount bike carrier with increased stability on a vehicle trailer coupling and with increased load capacity.

The object is solved by a load carrier according to claim 1. Advantageous further formations are subject of the dependent claims.

According to the present disclosure a bike carrier is disclosed. The bike carrier is mountable on a trailer coupling comprising a neck, a coupling body supported by the neck, and at least one protrusion provided on the neck.

In the context of the present disclosure, a trailer coupling is to be understood as a coupling device mounted on the rear of a vehicle and allowing to releasably couple load carriers of different kinds thereon. Such a coupling device can be configured to allow coupling and towing trailers. The trailer coupling comprises a neck and a coupling body. The neck can comprise a vehicle side end configured to mount the trailer coupling to the vehicle. The other end of the neck is coupled to the coupling body and supports the same. The neck can comprise a curved shape.

A protrusion is provided on the neck. The protrusion is configured to provide an additional support section on the trailer coupling in addition to the coupling body. The protrusion can have a shape allowing an engagement therewith. Such an engagement is preferably a positive fit engagement also referred to as form fit engagement. In such an engagement, the protrusion blocks a movement of a member engaged therewith in more than one direction. The protrusion can be integrally formed with the neck.

For example, the neck and the protrusion can be integrally formed by molding. It is also possible to bond the protrusion to the neck. This can be done by welding, for instance. It is also possible to fixedly mount the protrusion to the neck without joining the protrusion and the neck on an atomic or molecular basis. The protrusion can extend in a direction which is substantially perpendicular to the extension direction of the trailer coupling and in particular such that the protrusion extends in horizontal direction and perpendicular to the longitudinal direction of a vehicle on which the trailer coupling is mounted.

The bike carrier comprises two support arms arranged pivotably between a non-use position and a use position. In the context of the present disclosure a use position is to be understood as a position taken by the support arms when the bike carrier is fixedly mounted on the trailer coupling and ready for supporting bikes thereon. The support arms can be part of a support frame of the bike carrier and transfer a load from a portion of the bike carrier on which a bike is supported. The support arms can be tubes made from aluminum, for instance.

Furthermore, the bike carrier comprises two primary supporting devices each having a movable receiving member configured to clamp the coupling body of the trailer coupling therebetween. The support arms are operatively coupled with the primary supporting device such that a movement of the support arms effects a movement of the receiving members. For example, the support arms can be directly coupled to the primary supporting devices or receiving members so that the primary supporting device or receiving member is integrally movable with the support arm to which it is coupled. The receiving member can be clipped or inserted on a support arm. In addition or in the alternative, the receiving member can be fixed on a support arm.

Furthermore, the bike carrier comprises a secondary supporting device configured to engage with the protrusion. The secondary supporting device can be configured such that an engagement with the protrusion takes place at a predetermined distance from an engagement or clamping with the coupling body. In the context of the present disclosure, an engagement between the secondary supporting device and the protrusion is established when the secondary supporting device at least accommodates a portion of the protrusion or vice versa. In this way, a movement of the accommodated element beyond a predetermined distance is blocked or prevented in more than one direction. It is to be noted that accommodated does not mean that the elements are in contact with each other. There can be a gap between the elements that are engaged with each other. However, the secondary supporting device and the protrusion are preferably configured such that such a gap is as small as possible and a movement is substantially completely blocked in a specific direction.

The receiving members are preferably movable between an open position in which the receiving members are arranged such that the coupling body is arrangeable between the two receiving members and an engaging position in which each of the two receiving members is arranged such that the receiving members contact an inserted coupling body, preferably from opposite sides.

Preferably, each receiving member is pivotably movable about a pivot axis. For example, the receiving members can be pivotably movable about a single pivot axis.

Preferably, a first receiving member of the receiving members is pivotably movable about a first pivot axis and a second receiving member of the receiving members is pivotably movable about a second pivot axis. Preferably, the pivot axes are arranged parallel with respect to each other.

Preferably, the secondary supporting device comprises at least one engaging member movable towards and away from the protrusion. Preferably, the engaging member comprises a recess or opening allowing an engagement with the protrusion by pivotably passing the engaging member over or on at least a portion of the protrusion.

Preferably, the protrusion is at least partially formed as a solid of revolution protruding from the neck. For example, the protrusion can be formed as a cylindrical pin or frusto-conical pin. Alternatively, the protrusion can comprise an oval or rectangular pin. The recess or opening can comprise an inner contour which at least partially follows an outer contour of the protrusion. The engaging member comprises a base plate in which the recess is formed. The recess can be formed in a U-shaped manner. The base plate can be coupled to the receiving member at one end and the recess can be provided in the opposite end.

The recess or opening extends in the engaging member in an extension direction which is substantially perpendicular to the pivot axis of the engaging member in which the recess or opening is provided. In the mounted state of the bike carrier, the pivot axis of the engaging member extends substantially in longitudinal direction of the vehicle and of the trailer coupling. As mentioned above, the protrusion can extend horizontally and perpendicular to a longitudinal direction of a vehicle on which the trailer coupling is mounted.

By pivoting the engaging member about the pivot axis, the recess or opening approaches the protrusion from above and is pivoted along the extension direction of the protrusion. In other words, the engaging member is not only radially moved towards the protrusion but also along the extension direction of the protrusion. The extension direction can be the extension direction in longitudinal direction of the protrusion. In case the protrusion comprises the shape of a solid of revolution, the extension axis can be the axis of revolution. The protrusion can have the shape of a right circular cylinder.

Preferably, the secondary supporting device, for example an engaging member thereof, comprises a supporting surface arranged substantially perpendicular to a movement direction of the secondary supporting device and configured to contact an abutment surface provided on the neck. For example, when the engaging member is pivotably arranged about a pivot axis, the supporting surface can be arranged parallel to the pivot axis or such that the pivot axis and the supporting surface lie in the same plane. An engaging member with such a supporting surface adds additional stability when the bike carrier is mounted on the trailer coupling and the supporting surface contacts the abutment surface on the neck.

The abutment surface can be a flat surface at least partially encircling the protrusion. For example, the abutment surface can be provided at a base portion of the protrusion, i.e. at a junction between protrusion and neck. In case the protrusion is a cylindrical pin protruding from the neck, the abutment surface can be a ring-like surface which extends substantially perpendicular to the lateral surface of the cylindrical pin. The abutment surface can be provided adjacent the protrusion or can be arranged on the neck at a predetermined distance from the protrusion.

Preferably, one of the primary supporting devices and the secondary supporting device are coupled to each other. For example, the primary supporting device and the secondary supporting device can be rigidly coupled to each other. The primary supporting device and the secondary supporting device can be integrally formed with each other, preferably by molding.

Preferably, one engaging member is integrally formed with one of the receiving members. For example, the engaging member can be integrally molded or cast with the receiving member. As an alternative, the engaging member can be integrally formed with one of the receiving members by welding. The receiving members preferably comprise reinforcing walls. The combination of a receiving member and an engaging member can also be referred to as coupling member.

Preferably, the support arms are integrally movably coupled with the primary supporting devices, for example with the receiving members. For example, the receiving members can be screwed onto an end of the support arms.

Preferably, the coupling body comprises a ball head and the receiving members comprise a bowl shape with an inner surface configured to contact the ball head. Preferably, the inner surface is configured to contact only a spherical zone of the ball head.

Preferably, at least one engaging member comprises a fork-like shape with two prongs defining an accommodating space between them for at least partially accommodating one of the protrusions.

Preferably, the receiving members and the engaging members are arranged such that in a condition in which the bike carrier is mounted on a trailer coupling of a vehicle, an operating position of the receiving member is offset with respect to an operating position of the engaging members in a longitudinal direction of the vehicle. In the context of the present disclosure, the operating position of the receiving member can be regarded as a position in which the receiving member is located at a longitudinal position in which a vertical line intersects with the center of the ball head. The operating position of the engaging members can be a position in which the engaging members are located at a longitudinal position in which a vertical line intersects with the center of the protrusion. The distance between both vertical lines can be regarded as the above mentioned offset.

Preferably, the two support arms are pivotably mounted on a base part at a distance from each other and such that shorter portions of the support arms are provided on one side of the base part and longer portions of the support arms are provided on the other side of the base part. The receiving members can be coupled to the shorter portions of the support arms.

Preferably, the bike carrier further comprises a tensioning mechanism configured to urge the two support arms into the use position upon operation of the same. Preferably, the tensioning mechanism is further configured to lock the two support arms in the use position.

Preferably, the tensioning mechanism and the receiving members are arranged on opposite sides of the base part. Alternatively or in addition, a bike support portion can be provided on each longer portion of the support arms.

### BRIEF DESCRIPTION OF THE DRAWINGS

Fig. 1 shows a perspective view of a bike carrier mounted on a trailer coupling.
Fig. 2 shows a perspective rear view of a coupling member of the bike carrier of Fig. 1.
Fig. 3 shows a perspective front view of a coupling member of the bike carrier of Fig. 1.
Fig. 4 shows a front view of the trailer coupling of Fig. 1.
Fig. 5 shows a side view of the trailer coupling of Fig. 1.
Fig. 6 shows a side view of the trailer coupling of Fig. 1 with a bike carrier mounted thereon.
Fig. 7 shows a perspective view of the bike carrier in a stowing state.
Fig. 8 shows a perspective view of the bike carrier in an intermediate mounting state.
Fig. 9 shows a perspective view of the bike carrier in a state in which it is mounted on the trailer coupling of a vehicle.

### DETAILED DESCRIPTION OF EMBODIMENTS

In the following, an embodiment as well as modifications of the present subject matter will be described with reference to the drawings. It is to be noted that similar elements in the drawings are denoted with the same reference signs.

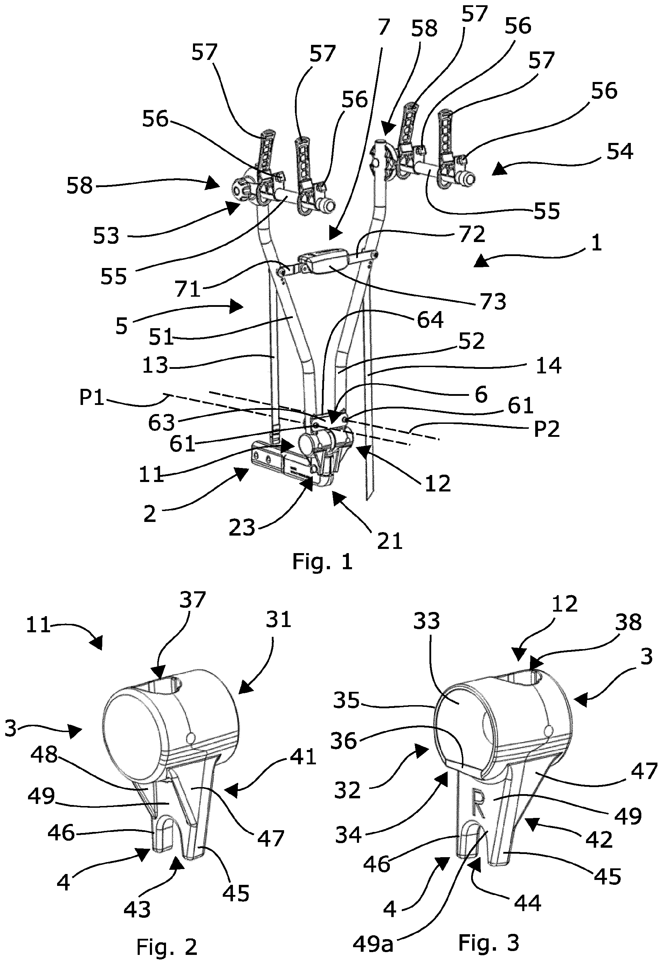

Fig. 1 shows a bike carrier 1 in a perspective view. In the shown state, the bike carrier 1 is mounted on a trailer coupling 2 of a vehicle (not shown in Fig. 1).

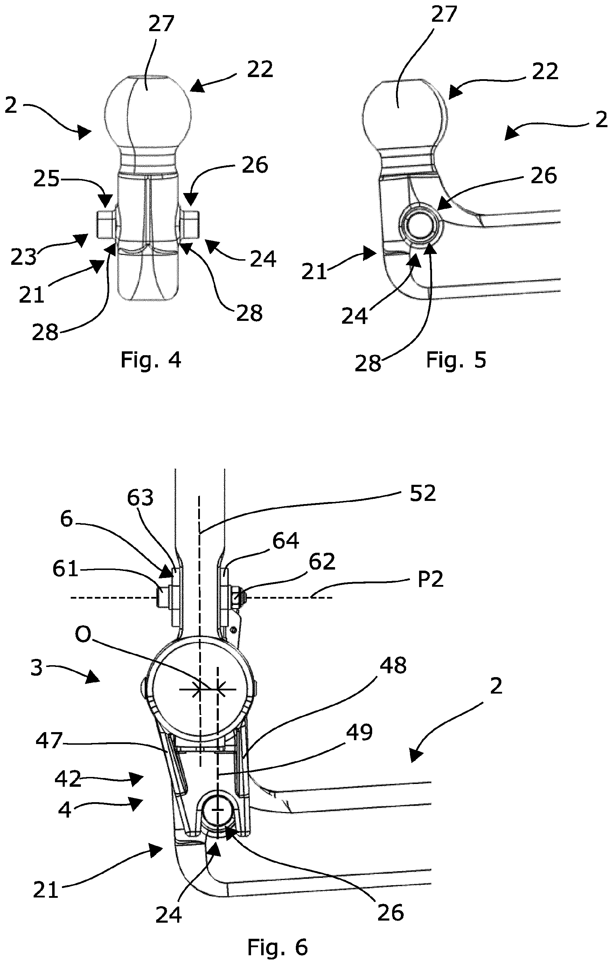

The trailer coupling 2 is shown in Figs. 4 and 5 and comprises a neck 21, a coupling body 22 embodied as a ball head 27 and supported by the neck 21, and protrusions 23, 24 embodied as cylindrical pins 25, 26 protruding from the neck 21 on opposite sides and at a predetermined distance from the ball head 27. The cylindrical pins 25, 26 are integrally formed with the neck 21 and are formed on the neck so as to extend in horizontal direction when the trailer coupling 2 is mounted on the rear of a vehicle.

The bike carrier 1 comprises two support arms 51, 52 forming a part of a foldable support frame 5 of the bike carrier 1. The two support arms 51, 52 are pivotably coupled to a base part 6.

The base part 6 comprises two substantially flat metal plates 63, 64 arranged at a distance from each other. The two support arms 51, 52 are accommodated between the flat metal plates 63, 64. More precisely, each support arm 51, 52 is pivotably held on the base part 6 by means of threaded bolts 61 that are passed through the base part 6 and the respective support arm 51, 52 and fixed by nuts (not shown in Fig. 1). One of the nuts 62 is visible in Fig. 6 which will be described later in greater detail.

The threaded bolts 61 define respective pivot axes P1, P2 of the support arms 51, 52. The left arm 51 is pivotable about pivot axis P1 and the right arm 52 is pivotable about pivot axis P2. As is further shown in Fig. 1, the pivot axes P1, P2 are parallel with respect to each other and extend in longitudinal direction of the trailer coupling 2. The longitudinal direction of the trailer coupling 2 corresponds to the longitudinal direction of a vehicle on which the trailer coupling is mounted. Accordingly, the pivot axes P1, P2 extend in the longitudinal direction of the vehicle when the bike carrier is mounted on the trailer coupling 2.

The support arms 51, 52 are mounted on the base part 6 such that a longer portion of the support arms 51, 52 is arranged on one side of the base part 6 and a shorter portion of the support arms 51, 52 is arranged on the opposite side of the base part 6. In the present configuration, the support arms 51, 52 are aluminum tubes but other configurations of the support arms are possible as well. The longer portion of the support arms 51, 52 also forms an upper portion of the support arms 51, 52 when the bike carrier 1 is in use, i.e. mounted on the trailer coupling 2.

At an end portion of the longer portion of the support arms, i.e. at an end portion of the upper portion of the support arms 51, 52, a respective bike support portion 53, 54 is mounted by means of a coupling mechanism 58. Each bike support portion 53, 54 comprises a support bar 55 which is substantially straight and comprises an aluminum tube in the present disclosure. Two frame holders 56 and two fixation straps 57 are provided on each support bar 55. Thus, the bike carrier 1 is configured to transport two bikes. The frame holders 56 are configured to support a portion of the frame of a bike thereon and the fixation straps 57 are configured to securely fix the portion of the bike frame accommodated in the frame holders 56. Each coupling mechanism 58 couples a support bar 55 of one of the bike support portions 53, 54 to the support arms 51, 52 in a foldable manner. In other words, the support bars 55 can be folded towards the support arms 51, 52 when the bike carrier 1 is to be stowed. In order to further secure bikes to be transported on the bike carrier 1 two straps 13, 14 are fixed on the support arms 51, 52, one on each support arm 51, 52.

The shorter portions of the support arms 51, 52, i.e. the lower portions of the support arms 51, 52 which are located below the base part 6 when the bike carrier is mounted on the trailer coupling 2, comprise coupling members 11, 12. The coupling members 11, 12 are configured to fixedly couple the bike carrier 1 to the trailer coupling 2. The coupling members 11, 12 are fixedly mounted on the lower portions of the support arms 51, 52 and are shown in greater detail in Figs. 2 and 3. Thus, the coupling members 11, 12 are integrally movable with the lower portions of the support arms 51, 52 and thus moved in response to a movement of the upper portions of the support arms 51, 52. Accordingly, the support arms 51, 52 can be regarded as operating levers of the coupling members 11, 12.

A tensioning mechanism 7 is provided between the upper portions of the support arms 51, 52. The tensioning mechanism 7 comprises two bars 71, 72 hingedly coupled to each other at one portion and hingedly coupled to the support arms at another portion thereof. The bars 11, 12 can be brought into a tensioned state or rotated such that the positions where the bars are coupled to the support arms 51, 52 are arranged at maximum distance. The maximum distance is configured such that the coupling members 11, 12 are positioned at a desired minimum distance from each other such that a sufficiently high clamping force is generated on the trailer coupling 2. Thus, the state in which the above mentioned maximum distance is achieved can also be referred to as tensioned state or clamping state of the bike carrier 1. The tensioning mechanism 7 further comprises a locking member 73 which is configured to releasably lock the bars 71, 72 in the tensioned state.

The coupling members 11, 12 will now be described in greater detail with respect to Figs. 2 and 3. Each coupling member 11, 12 comprises a primary supporting device 3 and a secondary supporting device 4. The primary supporting device 3 is configured so as to provide a support against the coupling body 22 in the form of a ball head 27 of the trailer coupling 2 as shown in Figs. 4 and 5. The secondary supporting device 4 is configured so as to support the bike carrier 1 against a protrusion 23, 24 provided on the neck 21 of the trailer coupling 2, which in the present disclosure is exemplified in the form of cylindrical pins 25, 26 integrally formed on the neck 21 of the trailer coupling 2 as shown in Figs. 4 and 5. As is also visible in Figs. 4 and 5, the neck 21 comprises an abutment surface 28 extending perpendicular to an extension direction of the cylindrical pins 25, 26.

The primary supporting device 3 comprises a receiving member 31, 32. The shape of the receiving member 31, 32 is based on a cylindrical solid body. A recess with a curved inner surface 33 is provided in one axial end of the cylindrical solid body, more precisely in the axial end which is intended to face the ball head 27. The recess is shaped such that the ball head 27 can be partially accommodated therein with an edge 35 surrounding a segment of the ball surface of the ball head 27. The inner surface 33 is configured such that only a spherical zone of the ball head 27 is in contact with the inner surface 33 when the receiving member 31, 32 is in contact with the ball head 27. A further recess 34 is provided in the edge 35. This recess 34 is formed according to the shape of the neck 21 adjacent the ball head 27. A curved surface 36 of the recess 34 can be configured to contact the neck 21 in order to provide additional support. Furthermore, a mounting recess 37, 38 for accommodating an end portion of a support arm 51, 52 is provided and extends in radial direction of the receiving member 31, 32.

The secondary supporting device 4 is integrally formed with the primary supporting device 3 and comprises an engaging member 41, 42. More precisely, the secondary supporting device 4 is integrally molded with the receiving member 31, 32. The engaging member 41, 42 protrudes from the receiving member 31, 32 on a side which is opposite to the side in which the mounting recess 37, 38 is provided. In other words, in the mounted state of the bike carrier 1, the engaging member 41, 42 protrudes downward from the receiving member 31, 32. The engaging member 41, 42 comprises a recess 43, 44 which is configured to allow an engagement with the protrusion 23, 24.

The recess 43, 44 is formed in a base plate 49 in a U-shaped manner giving the engaging member 41, 42 the shape of a fork having two prongs 45, 46. The inner contour of the recess 43, 44 at least partially follows an outer contour of the receiving member 31, 32. Furthermore, the recess extends in the engaging member 41, 42 in an extension direction which is substantially perpendicular to the pivot axis P1, P2 when the coupling member 11, 12 is mounted on a support arm 51, 52. Thus, the extension direction of the recess 43, 44 is substantially perpendicular to the extension direction of the mounting recess 37, 38. Due to the construction of the secondary supporting device 4, it is possible to pivotably pass the engaging member 41, 42 over at least a portion of the protrusion 23, 24. The engaging member 41, 42 further comprises a supporting surface 49a arranged substantially perpendicular to a movement direction of the engaging member 41, 42. This supporting surface 49a is configured to contact the above described abutment surface 28 provided on the neck 21. When pivoting the engaging member 41, 42, the supporting surface 49a approaches the abutment surface 28 and can contact the same when the bike carrier 1 is mounted on the trailer coupling 2.

The receiving member 31, 32 and the engaging member 41, 42 are arranged such that in a condition in which the bike carrier 1 is mounted on a trailer coupling 2 of a vehicle, an operating position of the receiving member 31, 32 is offset by a distance O with respect to an operating position of the engaging member 41, 42 in a longitudinal direction of the trailer coupling 2 mounted on a vehicle as is shown in Fig. 6. In order to strengthen the engaging member 41, 42 reinforcing walls 47, 48 are arranged with one side coupled to the base plate 49 and the another side coupled with an outer surface of the primary supporting device 3.

With reference to Figs. 6 to 8 it is described how the bike carrier 1 is mounted on the trailer coupling 2 of a vehicle 10.

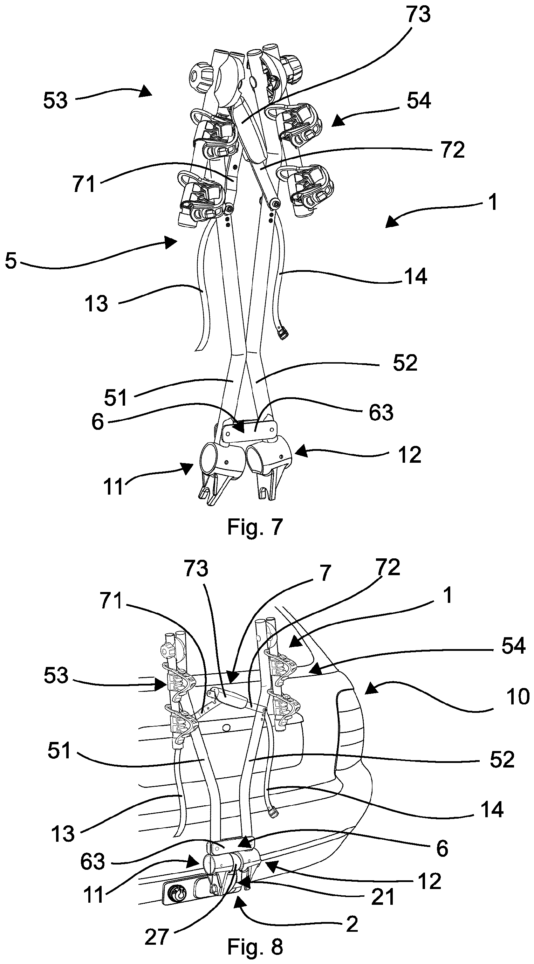

Fig. 7 shows a state in which the upper end portions of the support arms 51, 52 are folded against each other and brought into a non-use position. This state is also referred to as non-use state or stowing state as folding the support arms 51, 52 inward reduces the dimension of the bike carrier 1. In this state, the coupling members 11, 12 are positioned at a distance allowing to insert the ball head 27 of the trailer coupling between them. In this state, the bike carrier 1 is arranged on the ball head 27. After that, the upper portions of the support arms 51, 52 are moved away from each other to move the coupling members 11, 12 towards each other in order to engage them with the trailer coupling 2.

Fig. 8 shows a state in which the coupling members 11, 12 are brought into positions in which the ball head 27 is partially received in the receiving members 31, 32 and the engaging members 41, 42 are pivoted about pivot axes P1 and P2 into positions in which the cylindrical pins 25, 26 are arranged in the recesses of the engaging members 41, 42.

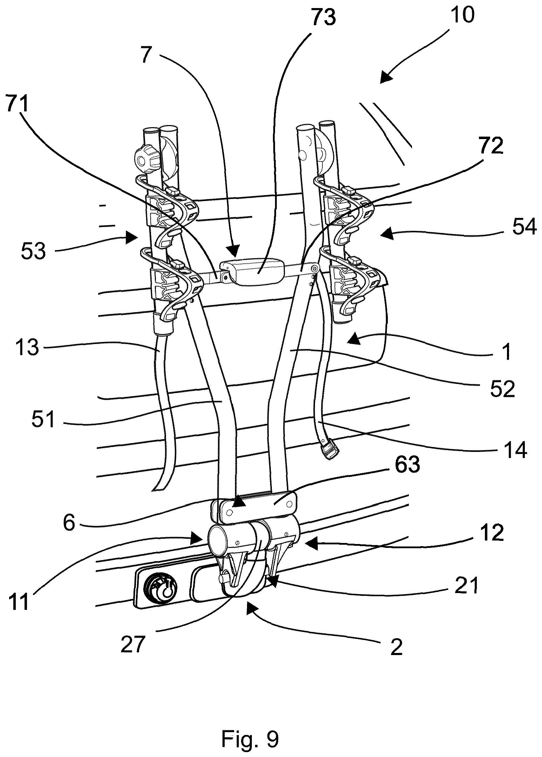

In Fig. 9, the tensioning mechanism 7 is brought into a tensioning state by moving the locking member 73 downward until the bars 71, 72 are arranged parallel with each other so that the upper portions of the support arms 51, 52 are arranged at maximum distance with respect to each other. The receiving members 31, 32 now firmly clamp the ball head 27 and the engaging members 41, 42 are engaged with the cylindrical pins 25, 26 with only a slight play between cylindrical pins 25, 26 and the walls of the recesses 43, 44.

### LIST OF REFERENCE SIGNS

- 1: Bike carrier
- 2: Trailer coupling
- 21: Neck
- 22: Coupling body
- 23, 24: Protrusion
- 25, 26: Cylindrical pin
- 27: Ball head
- 28: Abutment surface
- 3: Primary supporting device
- 31, 32: Receiving members
- 33: Inner surface
- 34: Recess
- 35: Edge
- 36: Surface
- 37, 38: Mounting recess
- 4: Secondary supporting device
- 41, 42: Engaging member
- 43,44: Recess/opening
- 45, 46: Prongs
- 47, 48: Reinforcing wall
- 49: Base plate
- 49a: Supporting surface
- 5: Support frame
- 51, 52: Support arms
- 53, 54: Bike support portion
- 55: Support bar
- 56: Frame holder
- 57: Fixation straps
- 58: Coupling mechanism
- 6: Base part
- 61: Threaded bolt
- 62: Nut
- 63, 64: Metal plates
- 7: Tensioning mechanism
- 71, 72: Bar
- 73: Locking member
- 10: Vehicle
- 11, 12: Coupling member
- 13, 14: Strap
- P1, P2: Pivot axis

## Claims

1. Bike carrier (1) mountable on a trailer coupling (2), said bike carrier (1) comprising
two support arms (51, 52) arranged pivotably between a non-use position and a use position;
two primary supporting devices (3) each having a movable receiving member (31, 32), wherein said support arms (51, 52) are operatively coupled with said primary supporting devices (3) such that a movement of said support arms (51, 52) effects a movement of said receiving members (31, 32),
**characterized in that**
each receiving member (31, 32) is configured to clamp a coupling body (22), preferably a ball head (27), supported by a neck (21) of said trailer coupling (2), and **in that**
said bike carrier (1) further comprises a secondary supporting device (4) configured to engage with at least one protrusion (23, 24) provided on said neck (21) of said trailer coupling (2).

2. Bike carrier (1) according to claim 1, wherein said receiving members (31, 32) are movable between an open position in which said receiving members (31, 32) are arranged such that said coupling body (22) is arrangeable between said two receiving members (31, 32) and an engaging position in which each of said two receiving members (31, 32) is arranged such that said receiving members (31, 32) contact an inserted coupling body (22), preferably from opposite sides.

3. Bike carrier (1) according to one of claims 1 or 2, wherein each receiving member (31, 32) is pivotably movable about a pivot axis (P1, P2).

4. Bike carrier (1) according to one of the preceding claims, wherein a first receiving member (31) of said receiving members is pivotably movable about a first pivot axis (P1) and a second receiving member (32) of said receiving members is pivotably movable about a second pivot axis (P2), wherein preferably said pivot axes (P1, P2) are arranged parallel with respect to each other.

5. Bike carrier (1) according to one of the preceding claims, wherein said secondary supporting device (4) comprises at least one engaging member (41, 42) movable towards and away from said protrusion (23, 24), wherein said protrusion (23, 24) preferably comprises a cylindrical, oval or rectangular pin and wherein said engaging member (41, 42) preferably comprises a recess or opening (43, 44) allowing an engagement with said protrusion (23, 24) by pivotably passing said engaging member (41, 42) over at least a portion of said protrusion (23, 24).

6. Bike carrier (1) according to claims 3 to 5, wherein said protrusion (23, 24) is at least partially formed as a solid of revolution, preferably as a cylindrical pin (25, 26) or frusto-conical pin, protruding from said neck (21), and wherein said recess or opening (43, 44) comprises an inner contour which at least partially follows an outer contour of said solid of revolution.

7. Bike carrier (1) according to claims 5 or 6, wherein said recess or opening (43, 44) extends in said engaging member (41, 42) in an extension direction which is substantially perpendicular to said pivot axis (P1, P2) of said engaging member (41, 42) in which said recess or opening (43, 44) is provided.

8. Bike carrier (1) according to one of claims 5 to 7, wherein said secondary supporting device, preferably an engaging member (41, 42) thereof, comprises a supporting surface (49a) arranged substantially perpendicular to a movement direction of said secondary supporting device (4), preferably of said engaging member (41, 42), and configured to contact an abutment surface (28) provided on said neck (21), wherein preferably said abutment surface (28) is a flat surface at least partially encircling said protrusion (23, 24).

9. Bike carrier (1) according to one of the preceding claims, wherein one of said primary supporting devices (3) and said secondary supporting device (4) are coupled to each other, preferably rigidly coupled to each other and/or integrally formed with each other, wherein preferably one engaging member (41, 42) is integrally formed with one of said receiving members (31, 32) preferably by integrally molding said engaging member with said receiving member, or integrally formed with one of said receiving members (31, 32) preferably by welding, wherein said receiving members (31, 32) preferably comprise reinforcing walls (47, 48).

10. Bike carrier (1) according to one of the preceding claims, wherein said support arms (51, 52) are integrally movably coupled with said primary supporting devices (3), in particular said receiving members (31, 32), wherein saidprimary supporting devices (3) are preferably screwed onto an end of said support arms (51, 52).

11. Bike carrier (1) according to one of the preceding claims, wherein said coupling body (22) comprises a ball head (27) and said receiving members (31, 32) comprise a bowl shape with an inner surface (33) configured to contact only a spherical zone of said ball head (27).

12. Bike carrier (1) according to one of the preceding claims, wherein at least one engaging member (41, 42) comprises a fork-like shape with two prongs (45, 46) defining an accommodating space between them for at least partially accommodating one of said protrusions (23, 24).

13. Bike carrier (1) according to one of the preceding claims, wherein said receiving members (31, 32) and said engaging members are arranged such that in a condition in which said bike carrier (1) is mounted on a trailer coupling of a vehicle, an operating position of said receiving member (31, 32) is offset with respect to an operating position of said engaging members (41, 42) in a longitudinal direction of the vehicle.

14. Bike carrier (1) according to one of the preceding claims, wherein said two support arms (51, 52) are pivotably mounted on a base part (6) at a distance from each other and such that shorter portions of said support arms (51, 52) are provided on one side of said base part (6) and longer portions of said support arms (51, 52) are provided on the other side of said base part (6), wherein said receiving members (31, 32) are coupled to said shorter portions of said support arms (51, 52).

15. Bike carrier (1) according to claim 14, further comprising a tensioning mechanism (7) configured to urge said two support arms (51, 52) into said use position upon operation of the same and preferably configured to lock said two support arms (51, 52) in said use position and/or wherein said tensioning mechanism (7) and said receiving members (31, 32) are arranged on opposite sides of said base part (6) and/or wherein a bike support portion (53, 54) is provided on each longer portion of said support arms (51, 52).

## Patentansprüche

1. Fahrradträger (1), der auf eine Anhängerkupplung (2) montierbar ist, wobei der Fahrradträger (1) umfasst:
zwei Haltearme (51, 52), die schwenkbar zwischen einer Nicht-Verwendungs-Position und einer Verwendungsposition angeordnet sind;
zwei primäre Haltevorrichtungen (3), welche jeweils ein bewegbares Aufnahmeelement (31, 32) aufweisen, wobei die Haltearme (51, 52) operativ mit den primären Haltevorrichtungen (3) verbunden sind, so dass eine Bewegung der Haltearme (51, 52) eine Bewegung der Aufnahmeelemente (31, 32) bewirkt,
**dadurch gekennzeichnet, dass**
jedes Aufnahmeelement (31, 32) dafür konfiguriert ist, einen Kupplungskörper (22), vorzugsweise einen Kugelkopf (27), einzuklemmen, der von einem Hals (21) der Anhängerkupplung (2) gehalten wird, und **dass**
der Fahrradträger (1) ferner eine sekundäre Haltevorrichtung (4) umfasst, die dafür konfiguriert ist, mit mindestens einem Vorsprung (23, 24) zu verrasten, der auf dem Hals (21) der Anhängerkupplung (2) vorgesehen ist.

2. Fahrradträger nach Anspruch 1, wobei die Aufnahmeelemente (31, 32) zwischen einer offenen Position, in welcher die Aufnahmeelemente (31, 32) so angeordnet sind, dass der Kupplungskörper (22) zwischen den beiden Aufnahmeelementen (31, 32) anzuordnen ist, und einer Verrastungsposition bewegbar sind, in welcher jedes der beiden Aufnahmeelemente (31, 32) so angeordnet ist, dass die Aufnahmeelemente (31, 32) einen eingefügten Kupplungskörper (22) berühren, vorzugsweise von gegenüberliegenden Seiten.

3. Fahrradträger (1) nach Anspruch 1 oder 2, wobei jedes Aufnahmeelement (31, 32) um eine Schwenkachse (P1, P2) schwenkbar zu bewegen ist.

4. Fahrradträger (1) nach einem der vorhergehenden Ansprüche, wobei ein erstes Aufnahmeelement (31) der Aufnahmeelemente um eine erste Schwenkachse (P1) schwenkbar zu bewegen ist und ein zweites Aufnahmeelement (32) der Aufnahmeelemente um eine zweite Schwenkachse (P2) schwenkbar zu bewegen ist, wobei die Schwenkachsen (P1, P2) vorzugsweise parallel zueinander angeordnet sind.

5. Fahrradträger (1) nach einem der vorhergehenden Ansprüche, wobei die sekundäre Haltevorrichtung (4) mindestens ein Verrastungselement (41, 42) umfasst, welches zu dem Vorsprung (23, 24) hin und von diesem weg bewegbar ist, wobei der Vorsprung (23, 24) vorzugsweise einen zylindrischen, ovalen oder rechteckigen Stift umfasst und wobei das Verrastungselement (41, 42) vorzugsweise eine Aussparung oder Öffnung (43, 44) umfasst, welche eine Verrastung mit dem Vorsprung (23, 24) ermöglicht, indem das Verrastungselement (41, 42) zumindest über einen Teil des Vorsprungs (23, 24) geführt wird.

6. Fahrradträger (1) nach Anspruch 3 bis 5, wobei der Vorsprung (23, 24) zumindest teilweise als ein Rotationskörper ausgebildet ist, vorzugsweise als ein zylindrischer Stift (25, 26) oder kegelstumpfförmiger Stift, der von dem Hals (21) vorsteht, und wobei die Aussparung oder Öffnung (43, 44) eine innere Kontur umfasst, welche zumindest teilweise einer äußeren Kontur des Rotationskörpers folgt.

7. Fahrradträger (1) nach Anspruch 5 oder 6, wobei sich die Aussparung oder Öffnung (43, 44) in dem Verrastungselement (41, 42) in eine Ausdehnungsrichtung erstreckt, die im Wesentlichen senkrecht zu der Schwenkachse (P1, P2) des Verrastungselements (41, 42) verläuft, in welchem die Aussparung oder Öffnung (43, 44) vorgesehen ist.

8. Fahrradträger (1) nach einem der Ansprüche 5 bis 7, wobei die sekundäre Haltevorrichtung, vorzugsweise ein Verrastungselement (41, 42) davon, eine Haltefläche (49a) umfasst, die im Wesentlichen senkrecht zu einer Bewegungsrichtung der sekundären Haltevorrichtung (4), vorzugsweise des Verrastungselements (41, 42), angeordnet ist und dafür konfiguriert ist, eine Anschlagfläche (28) zu berühren, die auf dem Hals (21) vorgesehen ist, wobei die Anschlagfläche (28) vorzugsweise eine ebene Fläche ist, die den Vorsprung (23, 24) zumindest teilweise kreisförmig umgibt.

9. Fahrradträger (1) nach einem der vorhergehenden Ansprüche, wobei eine der primären Haltevorrichtungen (3) und die sekundäre Haltevorrichtung (4) miteinander verbunden sind, vorzugsweise starr miteinander verbunden sind und/oder einstückig miteinander ausgebildet sind, wobei vorzugsweise ein Verrastungselement (41, 42) einstückig mit einem der Aufnahmeelemente (31, 32) ausgebildet ist, vorzugsweise durch einstückiges Formen des Verrastungselements mit dem Aufnahmeelement, oder einstückig mit einem der Aufnahmeelemente (31, 32) ausgebildet ist, vorzugsweise durch Schweißen, wobei die Aufnahmeelemente (31, 32) vorzugsweise Verstärkungswände (47, 48) umfassen.

10. Fahrradträger (1) nach einem der vorhergehenden Ansprüche, wobei die Haltearme (51, 52) zusammen bewegbar mit den primären Haltevorrichtungen (3), insbesondere den Aufnahmeelementen (31, 32), verbunden sind, wobei die primären Haltevorrichtungen (3) vorzugsweise auf ein Ende der Haltearme (51, 52) geschraubt sind.

11. Fahrradträger (1) nach einem der vorhergehenden Ansprüche, wobei der Kupplungskörper (22) einen Kugelkopf (27) umfasst und die Aufnahmeelemente (31, 32) eine Schüsselform mit einer Innenfläche (33) umfassen, die dafür konfiguriert ist, nur eine Kugelzone des Kugelkopfes (27) zu berühren.

12. Fahrradträger (1) nach einem der vorhergehenden Ansprüche, wobei mindestens ein Verrastungselement (41, 42) eine gabelartige Form mit zwei Zinken (45, 46) umfasst, die einen Aufnahmeraum zwischen sich definieren, um einen der Vorsprünge (23, 24) zumindest teilweise aufzunehmen.

13. Fahrradträger (1) nach einem der vorhergehenden Ansprüche, wobei die Aufnahmeelemente (31, 32) und die Verrastungselemente so angeordnet sind, dass in einem Zustand, in dem der Fahrradträger (1) auf einer Anhängerkupplung eines Fahrzeugs montiert ist, eine Betriebsposition des Aufnahmeelements (31, 32) in Bezug auf eine Betriebsposition der Verrastungselemente (41, 42) in einer Längsrichtung des Fahrzeugs versetzt ist.

14. Fahrradträger (1) nach einem der vorhergehenden Ansprüche, wobei die zwei Haltearme (51, 52) in einem Abstand voneinander schwenkbar auf einem Basisteil (6) montiert sind, und derart, dass kürzere Teile der Haltearme (51, 52) auf einer Seite des Basisteils (6) vorgesehen sind und längere Teile der Haltearme (51, 52) auf der anderen Seite des Basisteils (6) vorgesehen sind, wobei die Aufnahmeelemente (31, 32) mit den kürzeren Teilen der Haltearme (51, 52) verbunden sind.

15. Fahrradträger (1) nach Anspruch 14, ferner umfassend einen Spannmechanismus (7), der dafür konfiguriert ist, nach Bedienung desselben die beiden Haltearme (51, 52) in die Verwendungsposition zu zwingen, und vorzugsweise dafür konfiguriert ist, die beiden Haltearme (51, 52) in der Verwendungsposition zu verriegeln, und/oder wobei der Spannmechanismus (7) und die Aufnahmeelemente (31, 32) auf gegenüberliegenden Seiten des Basisteils (6) angeordnet sind und/oder wobei auf jedem längeren Teil der Haltearme (51, 52) ein Fahrradhalteteil (53, 54) vorgesehen ist.

## Revendications

1. Porte-vélo (1) pouvant être monté sur un attelage de remorque (2), ledit porte-vélo (1) comprenant
deux bras de support (51, 52) agencés pivotants entre une position de non-utilisation et une position d'utilisation ;
deux dispositifs de support primaires (3) comprenant chacun un élément de réception mobile (31, 32), lesdits bras de support (51, 52) étant couplés fonctionnellement avec lesdits dispositifs de support primaires (3) de telle sorte qu'un mouvement desdits bras de support (51, 52) provoque un mouvement desdits éléments de réception (31, 32),
**caractérisé en ce que**
chaque élément de réception (31, 32) est conçu pour serrer un corps d'attelage (22), de préférence une tête à rotule (27), supporté par une encolure (21) dudit attelage de remorque (2), et **en ce que**
ledit porte-vélo (1) comprend en outre un dispositif de support secondaire (4) conçu pour entrer en prise avec au moins une protubérance (23, 24) prévue sur ladite encolure (21) dudit attelage de remorque (2).

2. Porte-vélo (1) selon la revendication 1, dans lequel lesdits éléments de réception (31, 32) sont mobiles entre une position ouverte dans laquelle lesdits éléments de réception (31, 32) sont agencés de telle sorte que ledit corps d'attelage (22) puisse être agencé entre lesdits deux éléments de réception (31, 32), et une position d'entrée en prise dans laquelle chacun desdits deux éléments de réception (31, 32) est agencé de telle sorte que lesdits éléments de réception (31, 32) rentrent en contact avec un corps d'attelage (22) inséré, de préférence depuis des côtés opposés.

3. Porte-vélo (1) selon l'une des revendications 1 et 2, dans lequel chaque élément de réception (31, 32) est mobile par pivotement autour d'un axe de pivotement (P1, P2).

4. Porte-vélo (1) selon l'une quelconque des revendications précédentes, dans lequel un premier élément de réception (31) parmi lesdits éléments de réception est mobile par pivotement autour d'un premier axe de pivotement (P1), et un second élément de réception (32) parmi lesdits éléments de réception est mobile par pivotement autour d'un second axe de pivotement (P2), lesdits axes de pivotement (P1, P2) étant de préférence agencés en parallèle l'un par rapport à l'autre.

5. Porte-vélo (1) selon l'une quelconque des revendications précédentes, dans lequel ledit dispositif de support secondaire (4) comprend au moins un élément d'entrée en prise (41, 42) pouvant être déplacé vers ladite protubérance (23, 24) et éloigné de celle-ci comprenant de préférence une goupille cylindrique, ovale ou rectangulaire, et ledit élément d'entrée en prise (41, 42) comprenant de préférence un évidement ou une ouverture (43, 44) permettant une entrée en prise avec ladite protubérance (23, 24) par passage par pivotement dudit élément d'entrée en prise (41, 42) sur au moins une partie de ladite protubérance (23, 24).

6. Porte-vélo (1) selon les revendications 3 à 5, dans lequel ladite protubérance (23, 24) a au moins partiellement la forme d'un solide de révolution, de préférence la forme d'une goupille cylindrique (25, 26) ou d'une goupille tronconique, dépassant de ladite encolure (21), et dans lequel ledit évidement ou ladite ouverture (43, 44) comprend un contour intérieur qui suit au moins partiellement un contour extérieur dudit solide de révolution.

7. Porte-vélo (1) selon la revendication 5 ou 6, dans lequel ledit évidement ou ladite ouverture (43, 44) s'étend dans ledit élément d'entrée en prise (41, 42) dans une direction d'extension qui est sensiblement perpendiculaire audit axe de pivotement (P1, P2) dudit élément d'entrée en prise (41, 42) dans lequel est prévu ledit évidement ou ladite ouverture (43, 44).

8. Porte-vélo (1) selon l'une quelconque des revendications 5 à 7, dans lequel ledit dispositif de support secondaire, de préférence un élément d'entrée en prise (41, 42) de celui-ci, comprend une surface de support (49a) agencée sensiblement perpendiculaire à une direction de mouvement dudit dispositif de support secondaire (4), de préférence dudit élément d'entrée en prise (41, 42), et conçue pour rentrer en contact avec une surface de butée (28) prévue sur ladite encolure (21), ladite surface de butée (28) étant de préférence une surface plate encerclant au moins partiellement ladite protubérance (23, 24).

9. Porte-vélo (1) selon l'une quelconque des revendications précédentes, dans lequel un desdits dispositifs de support primaires (3) et ledit dispositif de support secondaire (4) sont couplés l'un avec l'autre, de préférence couplés rigidement l'un avec l'autre et/ou formés d'une seule pièce l'un avec l'autre, un élément d'entrée en prise (41, 42) étant de préférence formé d'une seule pièce avec un desdits éléments de réception (31, 32), de préférence par moulage dudit élément d'entrée en prise d'une seule pièce avec ledit élément de réception, ou formé d'une seule pièce avec un desdits éléments de réception (31, 32), de préférence par soudage, lesdits éléments de réception (31, 32) comprenant de préférence des parois de renfort (47, 48).

10. Porte-vélo (1) selon l'une quelconque des revendications précédentes, dans lequel lesdits bras de support (51, 52) sont couplés mobiles d'une seule pièce avec lesdits dispositifs de support primaires (3), en particulier lesdits éléments de réception (31, 32), lesdits dispositifs de support primaires (3) étant de préférence vissés sur une extrémité desdits bras de support (51, 52).

11. Porte-vélo (1) selon l'une quelconque des revendications précédentes, dans lequel ledit corps d'attelage (22) comprend une tête à rotule (27), et lesdits éléments de réception (31, 32) comprennent une forme de bol dont la surface intérieure (33) est conçue pour rentrer en contact uniquement avec une zone sphérique de ladite tête à rotule (27).

12. Porte-vélo (1) selon l'une quelconque des revendications précédentes, dans lequel au moins un élément d'entrée en prise (41, 42) comprend une forme fourchue à deux branches (45, 46) définissant un espace de logement entre elles pour loger au moins partiellement une desdites protubérances (23, 24).

13. Porte-vélo (1) selon l'une quelconque des revendications précédentes, dans lequel lesdits éléments de réception (31, 32) et lesdits éléments d'entrée en prise sont agencés de telle sorte que lorsque ledit porte-vélo (1) est monté sur un attelage de remorque d'un véhicule, une position de fonctionnement dudit élément de réception (31, 32) soit décalée par rapport à une position de fonctionnement desdits éléments d'entrée en prise (41, 42) dans une direction longitudinale du véhicule.

14. Porte-vélo (1) selon l'une quelconque des revendications précédentes, dans lequel lesdits deux bras de support (51, 52) sont montés pivotants sur une partie de base (6) à une certaine distance l'un de l'autre et de telle sorte que des parties plus courtes desdits bras de support (51, 52) soient prévues sur un côté de ladite partie de base (6) et des parties plus longues desdits bras de support (51, 52) soient prévues sur l'autre côté de ladite partie de base (6), lesdits éléments de réception (31, 32) étant couplés auxdites parties plus courtes desdits bras de support (51, 52).

15. Porte-vélo (1) selon la revendication 14, comprenant en outre un mécanisme de tensionnement (7) conçu pour solliciter lesdits deux bras de support (51, 52) dans ladite position d'utilisation lors de l'actionnement de celui-ci, et de préférence conçu pour verrouiller lesdits deux bras de support (52, 52) dans ladite position d'utilisation, et/ou dans lequel ledit mécanisme de tensionnement (7) et lesdits éléments de réception (31, 32) sont agencés sur des côtés opposés de ladite partie de base (6) et/ou dans lequel une partie (53, 54) du porte-vélo est placée sur chaque partie plus longue desdits bras de support (51, 52).
